(19) Europäisches Patentamt
European Patent Office
Office européen des brevets

(11) **EP 3 178 880 B1**

(12) **EUROPEAN PATENT SPECIFICATION**

(45) Date of publication and mention
of the grant of the patent:
**24.11.2021 Bulletin 2021/47**

(51) Int Cl.:
*C08L 21/00* (2006.01)     *B60C 1/00* (2006.01)
*B60C 5/14* (2006.01)      *C08K 3/36* (2006.01)
*C08K 7/26* (2006.01)      *C08L 7/00* (2006.01)
*C08L 9/00* (2006.01)      *C08L 9/06* (2006.01)

(21) Application number: **15829771.3**

(22) Date of filing: **29.07.2015**

(86) International application number:
**PCT/JP2015/071558**

(87) International publication number:
**WO 2016/021467 (11.02.2016 Gazette 2016/06)**

(54) **RUBBER COMPOSITION AND TIRE**

KAUTSCHUKZUSAMMENSETZUNG UND REIFEN

COMPOSITION DE CAOUTCHOUC ET PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.08.2014 JP 2014159665**

(43) Date of publication of application:
**14.06.2017 Bulletin 2017/24**

(73) Proprietor: **Sumitomo Rubber Industries, Ltd.
Kobe-shi, Hyogo 651-0072 (JP)**

(72) Inventors:
• **HATANO, Seiji**
  **Kobe-shi**
  **Hyogo 651-0072 (JP)**
• **YOKOYAMA, Yuka**
  **Kobe-shi**
  **Hyogo 651-0072 (JP)**
• **TANAKA, Kouhei**
  **Kobe-shi**
  **Hyogo 651-0072 (JP)**
• **MINAGOSHI, Akira**
  **Kobe-shi**
  **Hyogo 651-0072 (JP)**
• **HOCHI, Kazuo**
  **Kobe-shi**
  **Hyogo 651-0072 (JP)**
• **NAKAMURA, Masanobu**
  **Kobe-shi**
  **Hyogo 651-0072 (JP)**
• **KONDO, Toshikazu**
  **Kobe-shi**
  **Hyogo 651-0072 (JP)**
• **OGATA, Kenichiro**
  **Kobe-shi**
  **Hyogo 651-0072 (JP)**

(74) Representative: **TBK
Bavariaring 4-6
80336 München (DE)**

(56) References cited:
**EP-A1- 1 482 007      EP-A1- 1 686 152
EP-A1- 2 100 921      JP-A- H1 149 895
JP-A- H07 247 109     JP-A- H08 501 527
JP-A- S55 139 460     JP-A- 2013 082 874
US-A- 4 976 945       US-A- 5 225 475
US-A- 5 321 072       US-A- 6 096 284
US-A1- 2006 205 858   US-A1- 2007 293 619
US-A1- 2010 181 002   US-A1- 2012 130 010
US-A1- 2014 102 611**

• **DATABASE WPI Week 200636 Thomson
Scientific, London, GB; AN 2006-347167
XP002775426, & JP 2006 124487 A (TOYO
RUBBER IND CO LTD) 18 May 2006 (2006-05-18)**
• **AREEJ T. ALMALKAWI ET AL: "One-part alkali
activated cement based volcanic pumice",
CONSTRUCTION AND BUILDING MATERIALS,
vol. 152, 8 July 2017 (2017-07-08), pages 367-374,
XP055774166, NL DOI:
https://doi.org/10.1016/j.conbuildmat.2017 .06.1
39**

- **BILAL DEMIREL: "Optimization of the composite brick composed of expanded polystyrene and pumice blocks.", CONSTRUCTION AND BUILDING MATERIALS, vol. 40, 6 December 2012 (2012-12-06), pages 306-313, XP028972499, NL DOI: https://doi.org/10.1016/j.conbuildmat.2012 .11.0 08**
- **GHORBAN ASGARI ET AL: "The investigation of kinetic and isotherm of fluoride adsorption onto functionalize pumice stone", J HAZARD MATERIALS, vol. 217-218, 23 March 2012 (2012-03-23), pages 123-132, XP028412608, NL DOI: 10.1016/j.jhazmat.2012.03.003**

**Description**

TECHNICAL FIELD

The present invention relates to a rubber composition and a tire comprising a component consisted of the rubber composition.

BACKGROUND ART

For rubber compositions, various physical properties such as energy efficiency, abrasion resistance, mechanical strength and the like have been required and various measures have been taken to improve these physical properties.
For example, in order to improve energy efficiency which has attracted attention in recent years, it is known that it is effective to use silica with a large particle diameter. However, while the use of silica with a large particle diameter improves energy efficiency, it causes a problem that abrasion resistance and mechanical strength deteriorate.
Further, in view of convenience of processing, influences on the environment due to powder scattering and the like, granulation of silica has been carried out. However, a relationship between the hardness of granulated silica particles and physical properties of a rubber composition comprising this silica has not been considered enough. As elements for controlling physical properties of a rubber composition comprising silica, while a particle diameter represented by a BET specific surface area or the like, a pore distribution, a surface active group and the like are known, these elements are insufficient for expecting physical properties of a rubber composition comprising silica and controlling the physical properties.
Patent Document 1 discloses a rubber composition which compounds two kinds of silica with different nitrogen absorption specific surface areas or particle diameters and can improve energy efficiency, breaking resistance and processability in a favorable balance. However, the document does not consider the hardness of the granulated silica particles.

PRIOR ART DOCUMENT

Patent Document

Patent Document 1: JP 2014-125548 A

SUMMARY OF THE INVENTION

PROBLEM TO BE SOLVED BY THE INVENTION

An object of the present invention is to provide a rubber composition which is excellent in rubber properties such as abrasion resistance, rubber strength, rubber elasticity and the like while maintaining energy efficiency, and a tire comprising a component consisted of the rubber composition.

MEANS TO SOLVE THE PROBLEM

As a result of diligent studies, the inventors have found that by using a rubber composition comprising silica that has a BET specific surface area and a hardness of granulated particles as measured in accordance with a predetermined method within a predetermined range, the above problems can be solved since the hardness of granulated silica particles promotes dispersion thereof when rubber components and the like are kneaded, and as a result of further studies, the present inventors have completed the present invention.
That is, the present invention relates to a rubber composition comprising silica that has a BET specific surface area of not less than 50 $m^2$/g and not more than 130 $m^2$/g and a hardness of granulated particles as measured based on JIS K6221-1982 6.3.3 of not less than 23.5 cN.
It is preferable that the above silica has a DBP oil absorption amount of not more than 180 ml/100 g.
It is preferable that a pore volume in pores with a pore diameter of 10 to 100 nm in the silica is not more than 1.7 ml/g.
The present invention also relates to a tire comprising a component consisted of the above rubber composition.
The present invention relates to a tire comprising a base tread consisted of the above rubber composition.
The present invention relates to a tire comprising a clinch apex consisted of the above rubber composition.
The present invention relates to a tire for truck and bus comprising a tread consisted of the above rubber composition.

The present invention relates to a tire comprising a bead apex consisted of the above rubber composition.

The present invention relates to a tire comprising an inner liner consisted of the above rubber composition.

The present invention relates to a winter tire comprising a tread consisted of the above rubber composition.

The present invention relates to a tire comprising a side wall consisted of the above rubber composition.

The present invention relates to a tire comprising an under tread consisted of the above rubber composition.

EFFECT OF THE INVENTION

According to the present invention, by using a rubber composition comprising silica that has a BET specific surface area and a hardness of granulated particles as measured in accordance with a predetermined method within a predetermined range, a rubber composition which is excellent in rubber properties while maintaining energy efficiency can be provided. The present invention can further provide a tire comprising a component consisted of the above rubber composition.

EMBODIMENT FOR CARRYING OUT THE INVENTION

The rubber composition of the present invention is characterized by comprising silica that has a BET specific surface area of not less than 50 m$^2$/g and not more than 130 m$^2$/g and a hardness of granulated particles as measured based on JIS K6221-1982 6.3.3 of not less than 23.5 cN.

The BET specific surface area of the silica is not more than 130 m$^2$/g, preferably not more than 125 m$^2$/g, more preferably not more than 120 m$^2$/g, further preferably not more than 118 m$^2$/g. If the BET specific surface area exceeds 130 m$^2$/g, sufficient processability and energy efficiency may not be obtained. While a lower limit of the BET specific surface area is, since excellent abrasion resistance can be obtained, not less than 50 m2/g, preferably not less than 70 m2/g, further preferably not less than 90 m2/g. It is noted that the BET specific surface area of silica herein is a value as measured with the BET method in accordance with ASTM D3037-81.

The hardness of granulated particles of the above silica as measured based on JIS K6221-1982 6.3.3 is not less than 23.5 cN, preferably not less than 25.5 cN, more preferably not less than 27.5 cN, further preferably not less than 29.4 cN. If the hardness of the granulated particles is less than 23.5 cN, there is a tendency that a torque at kneading becomes insufficient and strength and abrasion resistance of the rubber composition deteriorate. While an upper limit of the hardness of the granulated particles is not limited particularly, since excellent processability can be obtained, it is preferably not more than 98.1 cN, more preferably not more than 49.0 cN, further preferably not more than 35.3 cN. It is noted that hardness (cN) of granulated particles herein is a value converted by the following formula using hardness (g) of granulated particles as measured in accordance with JIS K6221-1982 6.3.3.

$$\text{Hardness (cN) of granulated particles} = \text{hardness (gf) of measured granulated particles} \times 0.980665$$

One of methods for adjusting the above hardness of granulated particles is, for example, a method for adjusting the hardness of granulated particles by adjusting pressure and the like when granulating silica by a dry process which pre-compresses precipitated powder silica under use of reduced pressure and mechanical pressure and compression molds the silica with a shaped slot (see DE 1807714 B1), but the methods are not limited thereto.

The DBP oil absorption amount of the above silica is preferably not more than 180 ml/100 g, more preferably not more than 175 ml/100 g. If the DBP oil absorption amount exceeds 180 ml/100 g, achievement of both processability and abrasion resistance tends to be difficult. While a lower limit of the DBP oil absorption amount of the silica is not limited particularly, it is normally not less than 50 ml/100 g. It is noted that the DBP oil absorption amount of the silica is a value as measured in accordance with JIS K6217-4.

The pore volume in pores with a pore diameter of 10 to 100 nm in the above silica is preferably not more than 1.7 ml/g, more preferably not more than 1.6 ml/g. If the pore volume exceeds 1.7 ml/g, abrasion resistance tends to deteriorate. While a lower limit of the pore volume is not limited particularly, since a granulation process of silica is easy, it is preferably not less than 0.1 ml/g. It is noted that the pore volume of the silica herein is a value as measured by a mercury intrusion technique with a pore diameter distribution measuring device.

The content of the above silica based on 100 parts by mass of a rubber component is preferably not less than 5 parts by mass, more preferably not less than 10 parts by mass. If the content of the silica is less than 5 parts by mass, the effect of the present invention tends not to be obtained sufficiently. On the other hand, the content of the silica is preferably not more than 200 parts by mass, more preferably not more than 180 parts by mass. If the content of the silica exceeds 200 parts by mass, processability and energy efficiency tend to deteriorate.

If a clinch apex, an inner liner or an under tread of a tire is consisted of the rubber composition of the present invention, the content of the above silica based on 100 parts by mass of a rubber component is preferably not less than 10 parts by mass, more preferably not less than 20 parts by mass. If the content of the silica is less than 10 parts by mass, the effect of the present invention tends not to be obtained sufficiently. On the other hand, the content of the silica is preferably not more than 60 parts by mass, more preferably not more than 50 parts by mass. If the content of the silica exceeds 60 parts by mass, processability and energy efficiency tend to deteriorate.

If a tread of a tire for truck and bus is consisted of the rubber composition of the present invention, the content of the above silica based on 100 parts by mass of a rubber component is preferably not less than 10 parts by mass, more preferably not less than 20 parts by mass. If the content of the silica is less than 10 parts by mass, the effect of the present invention tends not to be obtained sufficiently. On the other hand, the content of the silica is preferably not more than 40 parts by mass, more preferably not more than 30 parts by mass. If the content of the silica exceeds 40 parts by mass, processability and abrasion resistance tend to deteriorate.

If a bead apex of a tire is consisted of the rubber composition of the present invention, the content of the above silica based on 100 parts by mass of a rubber component is preferably not less than 5 parts by mass, more preferably not less than 20 parts by mass, further preferably not less than 35 parts by mass. If the content of the silica is less than 5 parts by mass, reinforcing property of the rubber is insufficient and which may cause a problem in durability of the tire. On the other hand, the content of the silica is preferably not more than 100 parts by mass, more preferably not more than 80 parts by mass, further preferably not more than 65 parts by mass. If the content of the silica exceeds 100 parts by mass, processability tends to deteriorate.

A rubber component which can be used in the present invention is not limited particularly and examples thereof include a natural rubber (NR), an epoxidized natural rubber (ENR), an isoprene rubber (IR), a butadiene rubber (BR), a styrene butadiene rubber (SBR), a styrene-isoprene-butadiene copolymer rubber (SIBR), a chloroprene rubber (CR), an acrylonitrile-butadiene rubber (NBR), an ethylene-propylene-diene rubber (EPDM), a butyl rubber (IIR), a halogenated butyl rubber (X-IIR) and the like. These rubber components may be used alone or may be used in combination with two or more thereof. Among these, since performance required for each component of a tire can be easily ensured, it is preferable to use a diene rubber such as NR, ENR, BR, SBR and the like. With respect to these rubber components, a main chain or a terminal of a rubber may be modified with a modifying agent, or a rubber may have in part a branched structure by use of a polyfunctional modifying agent such as tin tetrachloride, silicon tetrachloride and the like. It is noted that types of rubber components and a compounded amount of each rubber component can be selected appropriately depending on parts to which these rubber components are applied and the like.

The NR is not limited particularly and examples thereof include those generally used in the tire industry such as SIR20, RSS#3, TSR20 and the like.

When the NR is compounded, the content thereof in the rubber component is preferably not less than 5% by mass, more preferably not less than 10% by mass, further preferably not less than 30% by mass, particularly preferably not less than 50% by mass. If the content is less than 5% by mass, excellent energy efficiency and rubber strength may not be obtained. While an upper limit of the NR content is not limited particularly, it is preferably not more than 90% by mass, more preferably not more than 80% by mass.

As for the ENR, a commercially available ENR may be used or an NR may be epoxidized to be used. For epoxidizing an NR, processes such as a chlorohydrin process, a direct oxidation process, a hydrogen peroxide process, an alkylhydroperoxide process, a peracid process and the like may be used, but processes are not limited thereto. An example of the peracid process is a process of reacting organic peracids such as peracetic acid and performic acid with an NR.

When the ENR is compounded, the content thereof in the rubber component is preferably not less than 10% by mass, more preferably not less than 40% by mass. If the content is less than 10% by mass, there is a tendency that a dispersion effect of a filler obtained due to the ENR is hard to obtain. On the other hand, the content of the ENR is preferably not more than 99% by mass, more preferably not more than 60% by mass. If the content exceeds 99% by mass, processability and/or breaking strength may deteriorate.

The butadiene rubber is not limited particularly and for example, a high cis-1,4-polybutadiene rubber (high-cis BR), a butadiene rubber comprising 1,2-syndiotactic polybutadiene crystals (SPB-containing BR), a modified butadiene rubber (modified BR) and the like can be used. Among these, since an effect of improving abrasion resistance is high, a high-cis BR in which a content of cis is not less than 95% by mass is preferable.

When the BR is compounded, the content thereof in the rubber component is preferably not less than 5% by mass, more preferably not less than 10% by mass. If the content of the BR is less than 5% by mass, an effect of improving abrasion resistance tends to be insufficient. On the other hand, the content of the BR is preferably not more than 90% by mass, more preferably not more than 80% by mass. If the content of the BR exceeds 90% by mass, processability and/or grip performance tend to deteriorate.

The styrene butadiene rubber is not limited particularly and for example, those generally used in the tire industry such as an emulsion polymerized styrene-butadiene rubber (E-SBR), a solution polymerized styrene-butadiene rubber (S-SBR), a modified SBR in which a terminal of these SBRs is modified (modified E-SBR, modified S-SBR) and the like can be used. Among these, since a balance between processability and grip performance is excellent, an S-SBR is preferable.

When the SBR is compounded, the content thereof in the rubber component is preferably not less than 10% by mass, more preferably not less than 20% by mass. If the content is less than 10% by mass, processability and/or grip performance tends to deteriorate. An upper limit of the content of the SBR is not limited particularly and may be 100% by mass.

In the case where a bead apex of a tire is consisted of the rubber composition of the present invention, if the SBR is compounded, the content thereof in the rubber component is preferably not less than 5% by mass, more preferably not less than 10% by mass, further preferably not less than 15% by mass. On the other hand, the content of the SBR is preferably not more than 95% by mass, more preferably not more than 60% by mass, further preferably not more than 55% by mass, particularly preferably not more than 50% by mass. The content of the SBR within this range allows obtaining satisfactory energy efficiency and processability.

The styrene content of the SBR is preferably not less than 5% by mass, more preferably not less than 10% by mass, further preferably not less than 20% by mass. If the content is less than 5% by mass, sufficient rubber strength may not be obtained. On the other hand, the styrene content is preferably not more than 60% by mass, more preferably not more than 50% by mass, further preferably not more than 30% by mass. If the content exceeds 60% by mass, excellent energy efficient may not be obtained. It is noted that the styrene content of the SBR herein is calculated from a $^1$H-NMR measurement.

In addition to the above components, the rubber composition of the present invention may also appropriately comprise compounding agents conventionally used in the rubber industry, for example, a filler for reinforcement other than silica such as a silane coupling agent, carbon black and the like, oil, wax, a zinc oxide, a stearic acid, various anti-aging agents, a vulcanization agent, a vulcanization accelerator and the like.

Any silane coupling agent conventionally used together with silica can be used as the above silane coupling agent, and examples thereof include: sulfide silane coupling agents such as

bis (3-triethoxysilylpropyl) tetrasulfide,
bis (2-triethoxysilylethyl) tetrasulfide,
bis (4-triethoxysilylbutyl) tetrasulfide,
bis(3-trimethoxysilylpropyl) tetrasulfide,
bis (2-trimethoxysilylethyl) tetrasulfide,
bis(4-trimethoxysilylbutyl)tetrasulfide,
bis(3-triethoxysilylpropyl)trisulfide, bis(2-triethoxysilylethyl)trisulfide,
bis(4-triethoxysilylbutyl) trisulfide, bis(3-trimethoxysilylpropyl)trisulfide,
bis(2-trimethoxysilylethyl)trisulfide, bis(4-trimethoxysilylbutyl)trisulfide,
bis(3-triethoxysilylpropyl)disulfide, bis(2-triethoxysilylethyl)disulfide,
bis(4-triethoxysilylbutyl)disulfide, bis(3-trimethoxysilylpropyl)disulfide,
bis(2-trimethoxysilylethyl)disulfide, bis(4-trimethoxysilylbutyl)disulfide,
3-trimethoxysilylpropyl-N,N-dimethylthiocarbamoyl tetrasulfide,
3-triethoxysilylpropyl-N,N-dimethylthiocarbamoyl tetrasulfide,
2-triethoxysilylethyl-N,N-dimethylthiocarbamoyl tetrasulfide,
2-trimethoxysilylethyl-N,N-dimethylthiocarbamoyl tetrasulfide,
3-trimethoxysilylpropylbenzothiazolyl tetrasulfide,
3-triethoxysilylpropylbenzothiazole tetrasulfide, 3-triethoxysilylpropyl methacrylate monosulfide, 3-trimethoxysilylpropyl methacrylate monosulfide and the like; mercapto silane coupling agents such as
3-mercaptopropyltrimethoxysilane, 3-mercaptopropyltriethoxysilane,
2-mercaptoethyltrimethoxysilane, 2-mercaptoethyltriethoxysilane,
3-octanoylthio-1-propyltriethoxysilane and the like; vinyl silane coupling agents such as vinyltriethoxysilane, vinyltrimethoxysilane and the like; amino silane coupling agents such as
3-aminopropyltriethoxysilane, 3-aminopropyltrimethoxysilane,
3-(2-aminoethyl)aminopropyltriethoxysilane,
3-(2-aminoethyl)aminopropyltrimethoxysilane and the like; glycidoxy silane coupling agents such as γ-glycidoxypropyltriethoxysilane, γ-glycidoxypropyltrimethoxysilane,
γ-glycidoxypropylmethyldiethoxysilane,
γ-glycidoxypropylmethyldimethoxysilane and the like; nitro silane coupling agents such as 3-nitropropyltrimethoxysilane, 3-nitropropyltriethoxysilane and the like, and chloro silane coupling agents such as 3-chloropropyltrimethoxysilane,
3-chloropropyltriethoxysilane, 2-chloroethyltrimethoxysilane, 2-chloroethyltriethoxysilane and the like, and these may be used alone, or may be used in combination with two or more thereof. As to product names of these silane coupling agents, examples include Si69, Si75, Si363 manufactured by Degussa GmbH and NXT, NXT-LV, NXTULV, NXT-Z manufactured by Momentive Performance Materials INC. and the like. Among these, in view of achievement of both excellent cost and excellent performance, it is preferable to use NXT, which is a mercapto silane coupling agent, and a sulfide silane coupling agent and particularly, it is preferable to use bis(3-triethoxysilylpropyl)tetrasulfide such as Si69 and/or bis(3-triethoxysilylpropyl)disulfide such as Si75.

When a silane coupling agent is compounded, the content thereof based on 100 parts by mass of silica is preferably not less than 0.5 part by mass, more preferably not less than 1.5 parts by mass, further preferably not less than 2.5 parts by mass. If the content of the silane coupling agent is less than 0.5 part by mass, it may become difficult to disperse the silica well. On the other hand, the content of a silane coupling agent based on 100 parts by mass of silica is preferably not more than 20 parts by mass, more preferably not more than 15 parts by mass, further preferably not more than 10 parts by mass. If the content of the silane coupling agent exceeds 20 parts by mass, there is a tendency that a dispersing effect of the silica is difficult to improve and the cost is unnecessarily increased. There is also a tendency that a scorch time becomes short and processability in kneading and extruding deteriorates.

The above carbon black is not limited particularly and GPF, FEF, HAF, ISAF, SAF and the like may be used alone, or may be used in combination with two or more thereof. Assuming eventual depletion of oil resources, it is preferable to use carbon black which uses renewable biological materials. By compounding carbon black, a satisfactory reinforcing effect can be obtained and an effect of preventing whitening can be enhanced.

The nitrogen absorption specific surface area ($N_2SA$) of the carbon black is preferably not less than 10 $m^2$/g, more preferably not less than 20 $m^2$/g, further preferably not less than 100 $m^2$/g. If the $N_2SA$ is less than 10 $m^2$/g, there is a tendency that enough weather resistance cannot be obtained and abrasion resistance deteriorates. On the other hand, the $N_2SA$ of the carbon black is preferably not more than 280 $m^2$/g, more preferably not more than 250 $m^2$/g. If the $N_2SA$ of the carbon black exceeds 280 $m^2$/g, dispersibility and abrasion resistance tend to deteriorate. It is noted that the $N_2SA$ of the carbon black herein is determined in accordance with JIS K6217, method A.

When a bead apex of a tire is consisted of the rubber composition of the present invention, the $N_2SA$ of the carbon black is preferably not less than 10 $m^2$/g, more preferably not less than 30 $m^2$/g, further preferably not less than 50 $m^2$/g. If the $N_2SA$ is less than 10 $m^2$/g, sufficient adhesive property and rubber strength may not be obtained. On the other hand, the $N_2SA$ of the carbon black is preferably not more than 250 $m^2$/g, more preferably not more than 150 $m^2$/g, further preferably not more than 100 $m^2$/g. If the $N_2SA$ of the carbon black exceeds 250 $m^2$/g, there is a tendency that the viscosity before vulcanization becomes very high and processability as well as energy efficiency deteriorate.

When the carbon black is compounded, the content thereof based on 100 parts by mass of the rubber component is preferably not less than 1 part by mass, more preferably not less than 3 parts by mass. On the other hand, the content of the carbon black is preferably not more than 150 parts by mass, more preferably not more than 100 parts by mass. The content of the carbon black within the above range can ensure dynamic strength of the rubber composition and satisfactory weather resistance can be obtained.

In the case where a bead apex of a tire is consisted of the rubber composition of the present invention, if the carbon black is compounded, the content thereof based on 100 parts by mass of the rubber component is preferably not less than 5 parts by mass, more preferably not less than 20 parts by mass, further preferably not less than 40 parts by mass. If the content is less than 5 parts by mass, sufficient adhesive property and rubber strength may not be obtained. On the other hand, the content of the carbon black is preferably not more than 100 parts by mass, more preferably not more than 80 parts by mass, further preferably not more than 70 parts by mass. If the content exceeds 100 parts by mass, dispersibility and/or processability tends to deteriorate.

The rubber composition of the present invention may be produced by a commonly used method and for example, can be prepared by a method of kneading each of the above components with a Bunbury mixer, a kneader, an open roll and the like, followed by vulcanization.

The rubber composition of the present invention obtained in this manner can be suitably used for various components of a tire such as a cap tread, a base tread, an under tread, a clinch apex, a bead apex, a side wall, a breaker cushion rubber, a rubber for covering carcass cord, a run-flat reinforcing layer, an insulation, a chafer, an inner liner and the like of a tire. While the rubber composition can be also suitably used for a belt, a roll and the like, it is particularly preferably used for components of a tire.

The tire of the present invention may be produced by a commonly used method with the above rubber composition of the present invention. That is, a rubber composition comprising the above compounding agents as necessary based on the rubber component is molded by extrusion into the shape of various components of a tire (for example, a tread) in an unvulcanized state, assembled on a tire building machine with other components of a tire to form an unvulcanized tire by a commonly used method. This unvulcanized tire is heat-pressurized in a vulcanizer to obtain a tire of the present invention. While the tire of the present invention may be either a pneumatic tire or an airless (solid) tire, it is particularly preferably a pneumatic tire.

Particularly, a tire comprising a base tread consisted of the rubber composition of the present invention is excellent in energy efficiency and bending resistance. A tire comprising a clinch apex consisted of the rubber composition of the present invention is excellent in energy efficiency and steering stability. A tire for truck and bus comprising a tread consisted of the rubber composition of the present invention is excellent in energy efficiency, abrasion resistance and steering stability. A tire comprising a bead apex consisted of the rubber composition of the present invention is excellent in energy efficiency. A tire comprising an inner liner consisted of the rubber composition of the present invention is excellent in energy efficiency and air permeation resistance. A winter tire comprising a tread consisted of the rubber composition of the present invention is excellent in energy efficiency, abrasion resistance, steering stability and on-ice performance. A tire comprising a side wall consisted of the rubber composition of the present invention is excellent in energy efficiency and bending resistance. Further, a tire comprising an under tread consisted of the rubber composition of the present invention is excellent in energy efficiency and steering stability.

EXAMPLE

Hereinafter, the present invention will be described in more detail based on Examples, but the present invention is not limited thereto only.

A variety of chemicals used in Examples and Comparative Examples will be described below.

SBR 1: Buna VSL 2525-0 (S-SBR, styrene content: 25% by mass, vinyl content: 25% by mass) manufactured by LANXESS AG

SBR 2: Nipol1502 (E-SBR, styrene content: 23.5% by mass, vinyl content: 18% by mass) manufactured by ZEON Corporation BR: BR150B (cis content: 97%, $ML_{1+4}$ (100°C): 40, Mw/Mn: 3.3) manufactured by Ube Industries, Ltd.

VCR: VCR617 (SPB-containing BR, content of SPB: 17% by mass, melting point of SPB: 200°C) manufactured by Ube Industries, Ltd.

NR 1: TSR20

NR 2: RSS#3

ENR: ENR25 (epoxidation rate: 25%) manufactured by Kumpulan Guthrie Berhad

Carbon black 1: DIABLACK I (ISAF carbon, $N_2SA$: 114 $m^2$/g, DBP oil absorption amount: 114 ml/100 g) manufactured by Mitsubishi Chemical Corporation

Carbon black 2: ShoBlack N351H ($N_2SA$: 64 $m^2$/g, DBP oil absorption amount: 136 ml/100 g) manufactured by Cabot Japan K. K.

Carbon black 3: SEAST N (N330, $N_2SA$: 74 $m^2$/g, DBP oil absorption amount: 102 ml/100 g) manufactured by Tokai Carbon Co., Ltd.

Carbon black 4: SEAST V (N660, $N_2SA$: 27 $m^2$/g, DBP oil absorption amount: 26 ml/100 g) manufactured by Tokai Carbon Co., Ltd.

Carbon black 5: ShoBlack N330 (HAF, $N_2SA$: 75 $m^2$/g, DBP oil absorption amount: 102 ml/100 g) manufactured by Cabot Japan K. K.

Carbon black 6: ShoBlack N550 (FEF, $N_2SA$: 42 $m^2$/g, DBP oil absorption amount: 115 ml/100 g) manufactured by Cabot Japan K. K.

Silica 1: granulated silica as prepared by a production method shown below

Silica 2: granulated silica as prepared by a production method shown below

Silica 3: ZEOSIL115GR manufactured by Rhodia Co., Ltd.

Silica 4: 5000GR manufactured by Evonik Degussa GmbH

Silica 5: Ultrasil U360 manufactured by Degussa GmbH

Silane coupling agent 1: Si69 (bis(3-triethoxysilylpropyl)tetrasulfide) manufactured by Degussa GmbH

Silane coupling agent 2: Si266 (bis(3-triethoxysilylpropyl)disulfide) manufactured by Degussa GmbH

Oil 1: TDAE oil manufactured by Japan Energy Corporation

Oil 2: process oil manufactured by JX Nippon Oil & Energy Corporation

Oil 3: mineral oil PW-380 manufactured by Idemitsu Kosan Co., Ltd. Wax: OZOACE 0355 manufactured by Nippon Seiro Co., Ltd.

Zinc oxide: Zinc oxide II manufactured by Mitsui Mining & Smelting Co., Ltd.

Stearic acid: stearic acid beads "Tsubaki" manufactured by NOF Corporation

Anti-aging agent 1: Nocrac 6C (N-(1,3-dimethylbutyl)-N-phenyl-p-phenylenediamine, 6PPD) manufactured by OUCHI SHINKO CHEMICAL INDUSTRIAL CO., LTD. Anti-aging agent 2: Nocrac 224 (2,2,4-trimethyl-1,2-dihydroquinoline polymer) manufactured by OUCHI SHINKO CHEMICAL INDUSTRIAL CO., LTD.

Anti-aging agent 3: Antage RD (2,2,4-trimethyl-1,2-dihydroquinoline polymer) manufactured by Kawaguchi Chemical Industry Co., Ltd. Sulfur 1: sulfur powder manufactured by TSURUMI CHEMICAL INDUSTRY CO., LTD.

Sulfur 2: Mu-cron OT20 (insoluble sulfur) manufactured by SHIKOKU CHEMICALS CORPORATION
Vulcanization accelerator 1: Nocceler NS
(N-tert-butyl-2-benzothiazolylsulfeneamide) manufactured by OUCHI SHINKO CHEMICAL INDUSTRIAL CO., LTD.
Vulcanization accelerator 2: Nocceler D (1,3-Diphenylguanidine) manufactured by OUCHI SHINKO CHEMICAL INDUSTRIAL CO., LTD.

Production of granulated silica

The above silica 1 and silica 2 were prepared based on a normal production method of wet processed silica except that pressures of a granulation compactor were changed.

The hardness of granulated particles, BET specific surface area, DBP oil absorption amount and pore volume of silica 1 to 5 were measured. The results are shown in Table 1.

[Table 1]

Table 1

| | Hardness of granulated particles | | BET specific surface area ($m^2$/g) | DBP oil absorption amount (ml/100 g) | Pore volume (ml/g) |
|---|---|---|---|---|---|
| | (cN) | (g) | | | |
| Silica 1 | 30.4 | 31 | 115 | 170 | 1.50 |
| Silica 2 | 34.3 | 35 | 113 | 169 | 1.52 |
| Silica 3 | 22.6 | 23 | 110 | 180 | 1.63 |
| Silica 4 | 21.6 | 22 | 114 | 180 | 1.71 |
| Silica 5 | 17.7 | 18 | 50 | 220 | 1.18 |

Examples 1 and 2 and Comparative Examples 1 to 3

According to formulations shown in Table 2, all of the chemicals (other than sulfur and vulcanization accelerators) were kneaded for five minutes with a 1.7L Banbury mixer at the compound temperature at the time of discharge from mixer of 150°C to obtain a kneaded product. Then, sulfur and the vulcanization accelerators were added to the obtained kneaded product and the mixture was kneaded for four minutes at the compound temperature at the time of discharge from mixer of 105°C to obtain an unvulcanized rubber composition. The obtained unvulcanized rubber composition was press-vulcanized in a mold having a thickness of 1 mm for 30 minutes at 150°C to obtain a vulcanized rubber composition. With respect to the obtained unvulcanized rubber composition and vulcanized rubber composition, the following evaluations were conducted. The evaluations were conducted regarding Comparative Example 1 as a standard Comparative Example. The results are shown in Table 2.

<Index of processability>

According to a measuring method of a Mooney viscosity in accordance with JIS K6300-1 "Rubber, unvulcanized - Physical property - Part 1: Determination of Mooney viscosity and scorch time with Mooney viscometer", a Mooney viscosity ($ML_{1+4}$) of each unvulcanized rubber composition was measured under a temperature condition of 130°C. The results are shown with indices in accordance with the following calculation formula, regarding the $ML_{1+4}$ of the standard Comparative Example as 100. The larger the index of processability is, the smaller the $ML_{1+4}$ is and the more excellent the processability is.

$$\text{(Index of processability)} = \text{(}ML_{1+4} \text{ of standard Comparative Example)} / \text{(}ML_{1+4} \text{ of each composition)} \times 100$$

<Index of rolling resistance>

A loss tangent (tan$\delta$) of each vulcanized rubber composition was measured under a condition of a temperature of 70°C, an initial strain of 10%, a dynamic strain of 2%, and a frequency of 10 Hz using a viscoelastic spectrometer VES manufactured by Iwamoto Seisakusho K.K. The results are shown with indices in accordance with the following calculation formula, regarding the tanδ of the standard Comparative Example as 100. The larger the index of rolling resistance is, the more excellent the energy efficiency is.

$$\text{(Index of rolling resistance)} = \text{(tan}\delta \text{ of standard Comparative Example)} / (\text{ tan}\delta \text{ of each composition)} \times 100$$

<Index of rubber strength>

According to JIS K6251 "Vulcanized rubber and thermoplastic rubber - calculation of tensile characteristics", a tensile test was conducted under an atmosphere of 23°C using a No.3 dumbbell type test piece comprising each of the vulcanized rubber compositions, and an elongation at break (EB) (%) and a tensile strength at break (TB) (MPa) were measured. The results are shown with indices in accordance with the following calculation formula, regarding the EB × TB of the standard Comparative Example as 100. The larger the index of rubber strength is, the more excellent the breaking resistance is.

$$\text{(Index of rubber strength)} = \text{(EB} \times \text{TB of each composition)} / \text{(EB} \times \text{TB of standard Comparative Example)} \times 100$$

<Index of abrasion resistance>

An abrasion amount of each of the vulcanized rubber compositions was measured under a condition of room temperature, a weight load of 1.0 kg and a slipping rate of 30% using a Lambourn abrasion testing machine. The results are shown with indices in accordance with the following calculation formula, regarding the abrasion amount of the standard Comparative Example as 100. The larger the index is, the more excellent the abrasion resistance is.

$$\text{(Index of abrasion resistance)} = \text{(abrasion amount of standard Comparative Example)} / \text{(abrasion amount of each composition)} \times 100$$

<Index of steering stability>

A complex modulus (E*) of each of the vulcanized rubber compositions was measured under a condition of a temperature of 70°C, an initial strain of 10%, a dynamic strain of 2%, and a frequency of 10 Hz using a viscoelastic spectrometer VES manufactured by Iwamoto Seisakusho K.K. The results are shown with indices in accordance with the following calculation formula, regarding the E* of the standard Comparative Example as 100. The larger the index of steering stability is, the more excellent the steering stability is.

$$\text{(Index of steering stability)} = \text{(E* of each composition)} / \text{(E* of standard Comparative Example)} \times 100$$

[Table 2]

Table 2

|  | Example | | Comparative Example | | |
|---|---|---|---|---|---|
|  | 1 | 2 | 1 | 2 | 3 |
| Compounded amount (part by mass) |  |  |  |  |  |
| SBR 1 | 60 | 60 | 60 | 60 | 60 |
| BR | 40 | 40 | 40 | 40 | 40 |
| Carbon black 1 | 5 | 5 | 5 | 5 | 5 |

(continued)

| | Example | | Comparative Example | | |
|---|---|---|---|---|---|
| | 1 | 2 | 1 | 2 | 3 |
| Compounded amount (part by mass) | | | | | |
| Silica 1 | 100 | - | - | - | - |
| Silica 2 | - | 100 | - | - | - |
| Silica 3 | - | - | 100 | - | - |
| Silica 4 | - | - | - | 100 | - |
| Silica 5 | - | - | - | - | 100 |
| Silane coupling agent 1 | 8 | 8 | 8 | 8 | 8 |
| Oil 1 | 20 | 20 | 20 | 20 | 20 |
| Wax | 2 | 2 | 2 | 2 | 2 |
| Zinc oxide | 2 | 2 | 2 | 2 | 2 |
| Stearic acid | 2 | 2 | 2 | 2 | 2 |
| Anti-aging agent 1 | 2.5 | 2.5 | 2.5 | 2.5 | 2.5 |
| Sulfur 1 | 1.5 | 1.5 | 1.5 | 1.5 | 1.5 |
| Vulcanization accelerator 1 | 1.5 | 1.5 | 1.5 | 1.5 | 1.5 |
| Vulcanization accelerator 2 | 1.5 | 1.5 | 1.5 | 1.5 | 1.5 |
| Evaluation | | | | | |
| Index of processability | 100 | 98 | 100 | 98 | 103 |
| Index of rolling resistance | 105 | 103 | 100 | 102 | 105 |
| Index of rubber strength | 120 | 125 | 100 | 108 | 90 |
| Index of abrasion resistance | 110 | 115 | 100 | 95 | 89 |
| Index of steering stability | 108 | 110 | 100 | 103 | 95 |

From the results of Table 2, it can be seen that the rubber composition comprising silica that has a BET specific surface area and a hardness of granulated particles as measured in accordance with a predetermined method within a predetermined range is excellent in abrasion resistance, rubber strength and rubber elasticity while maintaining energy efficiency.

Examples 3 and 4 and Comparative Examples 4 and 5 (rubber composition for base tread)

According to formulations shown in Table 3, all of the chemicals (other than sulfur and vulcanization accelerators) were kneaded for five minutes with a 1.7L Banbury mixer at the compound temperature at the time of discharge from mixer of 150°C to obtain a kneaded product. Then, sulfur and the vulcanization accelerators were added to the obtained kneaded product and the mixture was kneaded for four minutes at the compound temperature at the time of discharge from mixer of 105°C to obtain an unvulcanized rubber composition. The obtained unvulcanized rubber composition was press-vulcanized in a mold having a thickness of 1 mm for 30 minutes at 150°C to obtain a vulcanized rubber composition. With respect to the obtained unvulcanized rubber composition and vulcanized rubber composition, the above-mentioned index of procesability and index of rolling resistance were evaluated and the following evaluations were conducted. The evaluations were conducted regarding Comparative Example 4 as a standard Comparative Example. The results are shown in Table 3.

<Index of bending resistance>

In accordance with JIS K 6260 "Rubber, vulcanized or thermoplastic -- Determination of flex cracking resistance and flex crack growth resistance (De Mattia type)", flex crack growth resistance of each of the vulcanized rubber compositions was measured. The results are shown with indices in accordance with the following calculation formula, regarding the crack growth rate of the standard Comparative Example as 100. The smaller the index of crack growth resistance is, the more excellent the bending resistance is.

$$\text{(Index of bending resistance)} = \text{(crack growth rate of each composition)}$$

$$/ \text{(crack growth rate of standard Comparative Example)} \times 100$$

[Table 3]

| | Example | | Comparative Example | |
|---|---|---|---|---|
| | 3 | 4 | 4 | 5 |
| Compounded amount (part by mass) | | | | |
| NR 1 | 60 | 60 | 60 | 60 |
| BR | 20 | 20 | 20 | 20 |
| VCR | 20 | 20 | 20 | 20 |
| Carbon black 2 | 5 | 5 | 5 | 5 |
| Silica 1 | 50 | - | - | - |
| Silica 2 | - | 50 | - | - |
| Silica 3 | - | - | 50 | - |
| Silica 4 | - | - | - | 50 |
| Silane coupling agent 2 | 4 | 4 | 4 | 4 |
| Oil 2 | 4 | 4 | 4 | 4 |
| Wax | 2 | 2 | 2 | 2 |
| Zinc oxide | 2 | 2 | 2 | 2 |
| Stearic acid | 2 | 2 | 2 | 2 |
| Anti-aging agent 1 | 2 | 2 | 2 | 2 |
| Anti-aging agent 2 | 1 | 1 | 1 | 1 |
| Sulfur 2 | 2.5 | 2.5 | 2.5 | 2.5 |
| Vulcanization accelerator 1 | 1.8 | 1.8 | 1.8 | 1.8 |
| Vulcanization accelerator 2 | 0.5 | 0.5 | 0.5 | 0.5 |
| Evaluation | | | | |
| Index of processability | 98 | 99 | 100 | 98 |
| Index of rolling resistance | 104 | 103 | 100 | 101 |
| Index of bending resistance | 80 | 75 | 100 | 95 |

Table 3

From the results of Table 3, it can be seen that the rubber composition for base tread comprising silica that has a BET specific surface area and a hardness of granulated particles as measured in accordance with a predetermined method within a predetermined range is excellent in bending resistance while maintaining energy efficiency.

Examples 5 and 6 and Comparative Examples 6 and 7 (rubber composition for clinch apex)

According to formulations shown in Table 4, all of the chemicals (other than sulfur and vulcanization accelerator) were kneaded for five minutes with a 1.7L Banbury mixer at the compound temperature at the time of discharge from mixer of 150°C to obtain a kneaded product. Then, sulfur and the vulcanization accelerator were added to the obtained kneaded product and the mixture was kneaded for four minutes at the compound temperature at the time of discharge from mixer of 105°C to obtain an unvulcanized rubber composition. The obtained unvulcanized rubber composition was press-vulcanized in a mold having a thickness of 1 mm for 30 minutes at 150°C to obtain a vulcanized rubber composition. With respect to the obtained unvulcanized rubber composition and vulcanized rubber composition, the above-mentioned index of processability, index of rolling resistance, index of rubber strength and index of steering stability were evaluated. The evaluations were conducted regarding Comparative Example 6 as a standard Comparative Example. The results are shown in Table 4.

[Table 4]

Table 4

| | Example | | Comparative Example | |
|---|---|---|---|---|
| | 5 | 6 | 6 | 7 |
| Compounded amount (part by mass) | | | | |
| NR 1 | 50 | 50 | 50 | 50 |
| BR | 50 | 50 | 50 | 50 |
| Carbon black 1 | 20 | 20 | 20 | 20 |
| Silica 1 | 40 | - | - | - |
| Silica 2 | - | 40 | - | - |
| Silica 3 | - | - | 40 | - |
| Silica 4 | - | - | - | 40 |
| Silane coupling agent 1 | 3 | 3 | 3 | 3 |
| Oil 1 | 8 | 8 | 8 | 8 |
| Wax | 1 | 1 | 1 | 1 |
| Zinc oxide | 4 | 4 | 4 | 4 |
| Stearic acid | 1 | 1 | 1 | 1 |
| Anti-aging agent 1 | 1 | 1 | 1 | 1 |
| Sulfur 1 | 1.5 | 1.5 | 1.5 | 1.5 |
| Vulcanization accelerator 1 | 1.5 | 1.5 | 1.5 | 1.5 |
| Evaluation | | | | |
| Index of processability | 100 | 97 | 100 | 98 |
| Index of rolling resistance | 105 | 103 | 100 | 102 |
| Index of rubber strength | 120 | 125 | 100 | 107 |
| Index of steering stability | 107 | 110 | 100 | 102 |

From the results of Table 4, it can be seen that the rubber composition for clinch apex comprising silica that has a BET specific surface area and a hardness of granulated particles as measured in accordance with a predetermined method within a predetermined range is excellent in rubber strength and steering stability while maintaining energy efficiency.

Examples 7 to 9 and Comparative Examples 8 and 9 (rubber composition for tread of a tire for truck and bus)

According to formulations shown in Table 5, all of the chemicals (other than sulfur and vulcanization accelerators) were kneaded for five minutes with a 1.7L Banbury mixer at the compound temperature at the time of discharge from mixer of 150°C to obtain a kneaded product. Then, sulfur and the vulcanization accelerators were added to the obtained kneaded product and the mixture was kneaded for four minutes at the compound temperature at the time of discharge from mixer of 105°C to obtain an unvulcanized rubber composition. The obtained unvulcanized rubber composition was press-vulcanized in a mold having a thickness of 1 mm for 30 minutes at 150°C to obtain a vulcanized rubber composition. With respect to the obtained unvulcanized rubber composition and vulcanized rubber composition, the above-mentioned index of procesability, index of rolling resistance, index of rubber strength, index of abrasion resistance and index of steering stability were evaluated. The evaluations were conducted regarding Comparative Example 8 as a standard Comparative Example. The results are shown in Table 5.
[Table 5]

Table 5

| | Example | | | Comparative Example | |
|---|---|---|---|---|---|
| | 7 | 8 | 9 | 8 | 9 |
| Compounded amount (part by mass) | | | | | |
| NR 1 | 80 | 80 | 80 | 80 | 80 |

(continued)

| | Example | | | Comparative Example | |
|---|---|---|---|---|---|
| | 7 | 8 | 9 | 8 | 9 |
| Compounded amount (part by mass) | | | | | |
| BR | 20 | 20 | 20 | 20 | 20 |
| Carbon black 1 | 40 | 40 | 32 | 40 | 40 |
| Silica 1 | 20 | - | - | - | - |
| Silica 2 | - | 20 | 30 | - | - |
| Silica 3 | - | - | - | 20 | - |
| Silica 4 | - | - | - | - | 20 |
| Silane coupling agent 1 | 2 | 2 | 3 | 2.5 | 2 |
| Oil 1 | 5 | 5 | 5 | 5 | 5 |
| Zinc oxide | 3 | 3 | 3 | 3 | 3 |
| Anti-aging agent 1 | 3 | 3 | 3 | 3 | 3 |
| Sulfur 1 | 1.5 | 1.5 | 1.5 | 1.5 | 1.5 |
| Vulcanization accelerator 1 | 1 | 1 | 1 | 1 | 1 |
| Vulcanization accelerator 2 | 0.5 | 0.5 | 0.7 | 0.5 | 0.5 |
| Evaluation | | | | | |
| Index of processability | 100 | 99 | 98 | 100 | 98 |
| Index of rolling resistance | 104 | 102 | 104 | 100 | 101 |
| Index of rubber strength | 115 | 120 | 126 | 100 | 104 |
| Index of abrasion resistance | 110 | 113 | 112 | 100 | 97 |
| Index of steering stability | 106 | 108 | 106 | 100 | 102 |

From the results of Table 5, it can be seen that the rubber composition for tread of a tire for truck and bus comprising silica that has a BET specific surface area and a hardness of granulated particles as measured in accordance with a predetermined method within a predetermined range is excellent in rubber strength, abrasion resistance and steering stability while maintaining energy efficiency.

Examples 10 to 13 and Comparative Examples 10 to 13 (rubber composition for bead apex)

According to formulations shown in Tables 6 and 7, all of the chemicals (other than sulfur and vulcanization accelerator) were kneaded for five minutes with a 1.7L Banbury mixer at the compound temperature at the time of discharge from mixer of 150°C to obtain a kneaded product. Then, sulfur and the vulcanization accelerator were added to the obtained kneaded product and the mixture was kneaded for four minutes at the compound temperature at the time of discharge from mixer of 105°C to obtain an unvulcanized rubber composition. The obtained unvulcanized rubber composition was press-vulcanized in a mold having a thickness of 1 mm for 30 minutes at 150°C to obtain a vulcanized rubber composition. With respect to the obtained unvulcanized rubber composition and vulcanized rubber composition, the above-mentioned index of procesability, index of rolling resistance, index of rubber strength, index of abrasion resistance and index of steering stability were evaluated. The evaluations were conducted regarding Comparative Example 10 as a standard Comparative Example for Table 6, and regarding Comparative Example 12 as a standard Comparative Example for Table 7. The results are shown in Tables 6 and 7.

[Table 6]

Table 6

| | Example | | Comparative Example | |
|---|---|---|---|---|
| | 10 | 11 | 10 | 11 |
| Compounded amount (part by mass) | | | | |
| NR 2 | 70 | 70 | 70 | 70 |
| SBR 2 | 30 | 30 | 30 | 30 |

(continued)

|  | Example | | Comparative Example | |
|---|---|---|---|---|
|  | 10 | 11 | 10 | 11 |
| Compounded amount (part by mass) | | | | |
| Silica 1 | 50 | - | - | - |
| Silica 2 | - | 50 | - | - |
| Silica 3 | - | - | 50 | - |
| Silica 4 | - | - | - | 50 |
| Silane coupling agent 1 | 4 | 4 | 4 | 4 |
| Zinc oxide | 4 | 4 | 4 | 4 |
| Stearic acid | 2 | 2 | 2 | 2 |
| Anti-aging agent 3 | 1 | 1 | 1 | 1 |
| Sulfur 1 | 1 | 1 | 1 | 1 |
| Vulcanization accelerator 1 | 1 | 1 | 1 | 1 |
| Evaluation | | | | |
| Index of processability | 100 | 98 | 100 | 98 |
| Index of rolling resistance | 105 | 103 | 100 | 102 |
| Index of rubber strength | 120 | 125 | 100 | 108 |

[Table 7]

Table 7

|  | Example | | Comparative Example | |
|---|---|---|---|---|
|  | 12 | 13 | 12 | 13 |
| Compounded amount (part by mass) | | | | |
| NR 2 | 70 | 70 | 70 | 70 |
| SBR 2 | 30 | 30 | 30 | 30 |
| Carbon black 3 | 20 | 20 | 20 | 20 |
| Silica 1 | 40 | - | - | - |
| Silica 2 | - | 40 | - | - |
| Silica 3 | - | - | 40 | - |
| Silica 4 | - | - | - | 40 |
| Silane coupling agent 1 | 3.2 | 3.2 | 3.2 | 3.2 |
| Zinc oxide | 4 | 4 | 4 | 4 |
| Stearic acid | 2 | 2 | 2 | 2 |
| Anti-aging agent 3 | 1 | 1 | 1 | 1 |
| Sulfur 1 | 1 | 1 | 1 | 1 |
| Vulcanization accelerator 1 | 1 | 1 | 1 | 1 |
| Evaluation | | | | |
| Index of processability | 100 | 100 | 100 | 96 |
| Index of rolling resistance | 106 | 105 | 100 | 101 |
| Index of rubber strength | 118 | 117 | 100 | 105 |

From the results of Tables 6 and 7, it can be seen that the rubber composition for bead apex comprising silica that has a BET specific surface area and a hardness of granulated particles as measured in accordance with a predetermined method within a predetermined range is excellent in rubber strength while maintaining energy efficiency.

Examples 14 and 15 and Comparative Examples 14 and 15 (rubber composition for inner liner)

According to formulations shown in Table 8, all of the chemicals (other than sulfur and vulcanization accelerator) were kneaded for five minutes with a 1.7L Banbury mixer at the compound temperature at the time of discharge from mixer of 150°C to obtain a kneaded product. Then, sulfur and the vulcanization accelerator were added to the obtained kneaded product and the mixture was kneaded for four minutes at the compound temperature at the time of discharge from mixer of 105°C to obtain an unvulcanized rubber composition. The obtained unvulcanized rubber composition was press-vulcanized in a mold having a thickness of 1 mm for 30 minutes at 150°C to obtain a vulcanized rubber composition. With respect to the obtained unvulcanized rubber composition and vulcanized rubber composition, the above-mentioned index of procesability, index of rolling resistance and index of rubber strength were evaluated and the following evaluation was conducted. The evaluations were conducted regarding Comparative Example 14 as a standard Comparative Example. The results are shown in Table 8.

<Index of air permeation resistance>

Rubber test pieces (diameter: 90 mm, thickness: 1 mm) respectively comprising each of vulcanized rubber compositions were prepared and air permeation coefficient (cc·cm/cm$^2$·sec/cmHg) of each rubber test piece was calculated in accordance with ASTM D 1434-75M. The results are shown with indices in accordance with the following calculation formula, regarding the air permeation coefficient of the standard Comparative Example as 100. The larger the index of air permeation resistance is, the harder the air transmits and the more excellent the air permeation resistance is.

$$\text{(Index of air permeation resistance)} = \text{(Air permeation coefficient of standard Comparative Example)} / \text{(Air permeability coefficient of each composition)} \times 100$$

[Table 8]

Table 8

|  | Example | | Comparative Example | |
|---|---|---|---|---|
|  | 14 | 15 | 14 | 15 |
| Compounded amount (part by mass) | | | | |
| NR 2 | 50 | 50 | 50 | 50 |
| ENR | 50 | 50 | 50 | 50 |
| Carbon black 4 | 8 | 8 | 8 | 8 |
| Silica 1 | 50 | - | - | - |
| Silica 2 | - | 50 | - | - |
| Silica 3 | - | - | 50 | - |
| Silica 4 | - | - | - | 50 |
| Silane coupling agent 1 | 1 | 1 | 1 | 1 |
| Zinc oxide | 4 | 4 | 4 | 4 |
| Stearic acid | 2 | 2 | 2 | 2 |
| Anti-aging agent 3 | 1 | 1 | 1 | 1 |
| Sulfur 1 | 1 | 1 | 1 | 1 |
| Vulcanization accelerator 1 | 1 | 1 | 1 | 1 |
| Evaluation | | | | |
| Index of processability | 103 | 101 | 100 | 99 |
| Index of rolling resistance | 103 | 100 | 100 | 98 |
| Index of rubber strength | 104 | 101 | 100 | 97 |
| Index of air permeation resistance | 103 | 99 | 100 | 98 |

From the results of Table 8, it can be seen that the rubber composition for inner liner comprising silica that has a BET specific surface area and a hardness of granulated particles as measured in accordance with a predetermined method within a predetermined range is excellent in rubber strength and air permeation resistance while maintaining energy efficiency.

Examples 16 and 17 and Comparative Examples 16 and 17 (rubber composition for tread of winter tire)

According to formulations shown in Table 9, all of the chemicals (other than sulfur and vulcanization accelerator) were kneaded for five minutes with a 1.7L Banbury mixer at the compound temperature at the time of discharge from mixer of 150°C to obtain a kneaded product. Then, sulfur and the vulcanization accelerator were added to the obtained kneaded product and the mixture was kneaded for four minutes at the compound temperature at the time of discharge from mixer of 105°C to obtain an unvulcanized rubber composition. The obtained unvulcanized rubber composition was press-vulcanized in a mold having a thickness of 1 mm for 30 minutes at 150°C to obtain a vulcanized rubber composition. With respect to the obtained unvulcanized rubber composition and vulcanized rubber composition, the above-mentioned index of procesability, index of rolling resistance, index of rubber strength, index of abrasion resistance and index of steering stability were evaluated. Further, the obtained each unvulcanized rubber composition was molded into the shape of a tread, laminated with other components of the tire in a tire building machine to form an unvulcanized tire and the unvulcanized tire was press-vulcanized for 12 minutes at 170°C to obtain winter tires for test. With respect to these winter tires for test, the following evaluation was conducted. The evaluation was conducted regarding Comparative Example 16 as a standard Comparative Example. The results are shown in Table 9.

<Index of performance on ice>

Each test tire was mounted on a test car (Japanese-made FR car, displacement: 2000 cc) and at Hokkaido Nayoro test course (temperature: -6 to -1°C), a distance (stoppage distance) from the place where the brake of the test car running at a speed of 30 km/h was locked to the place where the test car stopped was measured. The results are shown with indices according to the following formula, regarding the stoppage distance of the standard Comparative Example as 100. The larger the index of performance on ice is, the more excellent the braking performance on ice is. The experimental results are shown in Table 9.

$$\text{(Index of braking performance on ice)} = \text{(Stoppage distance of standard Comparative Example)} / \text{(Stoppage distance of each test tire)} \times 100$$

[Table 9]

Table 9

| | Example | | Comparative Example | |
|---|---|---|---|---|
| | 16 | 17 | 16 | 17 |
| Compounded amount (part by mass) | | | | |
| NR 2 | 40 | 40 | 40 | 40 |
| BR | 60 | 60 | 60 | 60 |
| Carbon black 5 | 5 | 5 | 5 | 5 |
| Silica 1 | 45 | - | - | - |
| Silica 2 | - | 45 | - | - |
| Silica 3 | - | - | 45 | - |
| Silica 4 | - | - | - | 45 |
| Silane coupling agent 1 | 3 | 3 | 3 | 3 |
| Oil 3 | 25 | 25 | 25 | 25 |
| Wax | 1 | 1 | 1 | 1 |
| Zinc oxide | 1.5 | 1.5 | 1.5 | 1.5 |
| Stearic acid | 1 | 1 | 1 | 1 |
| Anti-aging agent 1 | 2 | 2 | 2 | 2 |

(continued)

|  | Example | | Comparative Example | |
|---|---|---|---|---|
|  | 16 | 17 | 16 | 17 |
| Compounded amount (part by mass) | | | | |
| Sulfur 1 | 1 | 1 | 1 | 1 |
| Vulcanization accelerator 1 | 2 | 2 | 2 | 2 |
| Evaluation | | | | |
| Index of processability | 100 | 99 | 100 | 102 |
| Index of rolling resistance | 104 | 103 | 100 | 101 |
| Index of rubber strength | 118 | 122 | 100 | 107 |
| Index of abrasion resistance | 109 | 114 | 100 | 96 |
| Index of steering stability | 107 | 109 | 100 | 102 |
| Index of performance on ice | 106 | 109 | 100 | 99 |

From the results of Table 9, it can be seen that the rubber composition for tread of a winter tire comprising silica that has a BET specific surface area and a hardness of granulated particles as measured in accordance with a predetermined method within a predetermined range is excellent in rubber strength, abrasion resistance, steering stability and performance on ice while maintaining energy efficiency.

Examples 18 and 19 and Comparative Examples 18 and 19 (rubber composition for side wall)

According to formulations shown in Table 8, all of the chemicals (other than sulfur and vulcanization accelerators) were kneaded for five minutes with a 1.7L Banbury mixer at the compound temperature at the time of discharge from mixer of 150°C to obtain a kneaded product. Then, sulfur and the vulcanization accelerators were added to the obtained kneaded product and the mixture was kneaded for four minutes at the compound temperature at the time of discharge from mixer of 105°C to obtain an unvulcanized rubber composition. The obtained unvulcanized rubber composition was press-vulcanized in a mold having a thickness of 1 mm for 30 minutes at 150°C to obtain a vulcanized rubber composition. With respect to the obtained unvulcanized rubber composition and vulcanized rubber composition, the above-mentioned index of procesability, index of rolling resistance and index of bending resistance were evaluated. The evaluations were conducted regarding Comparative Example 18 as a standard Comparative Example. The results are shown in Table 10.
[Table 10]

Table 10

|  | Example | | Comparative Example | |
|---|---|---|---|---|
|  | 18 | 19 | 18 | 19 |
| Compounded amount (part by mass) | | | | |
| NR 1 | 40 | 40 | 40 | 40 |
| BR | 60 | 60 | 60 | 60 |
| Carbon black 6 | 5 | 5 | 5 | 5 |
| Silica 1 | 50 | - | - | - |
| Silica 2 | - | 50 | - | - |
| Silica 3 | - | - | 50 | - |
| Silica 4 | - | - | - | 50 |
| Silane coupling agent 2 | 4 | 4 | 4 | 4 |
| Oil 2 | 5 | 5 | 5 | 5 |
| Wax | 1 | 1 | 1 | 1 |
| Zinc oxide | 2 | 2 | 2 | 2 |
| Stearic acid | 2 | 2 | 2 | 2 |

(continued)

| | Example | | Comparative Example | |
|---|---|---|---|---|
| | 18 | 19 | 18 | 19 |
| Anti-aging agent 1 | 2 | 2 | 2 | 2 |
| Anti-aging agent 2 | 1 | 1 | 1 | 1 |
| Sulfur 1 | 2 | 2 | 2 | 2 |
| Vulcanization accelerator 1 | 1 | 1 | 1 | 1 |
| Vulcanization accelerator 2 | 0.5 | 0.5 | 0.5 | 0.5 |
| Evaluation | | | | |
| Index of processability | 100 | 100 | 100 | 99 |
| Index of rolling resistance | 104 | 103 | 100 | 101 |
| Index of bending resistance | 75 | 70 | 100 | 95 |

From the results of Table 10, it can be seen that the rubber composition for side wall comprising silica that has a BET specific surface area and a hardness of granulated particles as measured in accordance with a predetermined method within a predetermined range is excellent in bending resistance while maintaining energy efficiency.

Examples 20 and 21 and Comparative Examples 20 and 21 (rubber composition for under tread)

According to formulations shown in Table 11, all of the chemicals (other than sulfur and vulcanization accelerators) were kneaded for five minutes with a 1.7L Banbury mixer at the compound temperature at the time of discharge from mixer of 150°C to obtain a kneaded product. Then, sulfur and the vulcanization accelerators were added to the obtained kneaded product and the mixture was kneaded for four minutes at the compound temperature at the time of discharge from mixer of 105°C to obtain an unvulcanized rubber composition. The obtained unvulcanized rubber composition was press-vulcanized in a mold having a thickness of 1 mm for 30 minutes at 150°C to obtain a vulcanized rubber composition. With respect to the obtained unvulcanized rubber composition and vulcanized rubber composition, the above-mentioned index of procesability, index of rolling resistance, index of rubber strength and index of steering stability were evaluated. The evaluations were conducted regarding Comparative Example 20 as a standard Comparative Example. The results are shown in Table 11.
[Table 11]

Table 11

| | Example | | Comparative Example | |
|---|---|---|---|---|
| | 20 | 21 | 20 | 21 |
| Compounded amount (part by mass) | | | | |
| NR 1 | 100 | 100 | 100 | 100 |
| Carbon black 1 | 10 | 10 | 10 | 10 |
| Silica 1 | 45 | - | - | - |
| Silica 2 | - | 45 | - | - |
| Silica 3 | - | - | 45 | - |
| Silica 4 | - | - | - | 45 |
| Silane coupling agent 1 | 3.6 | 3.6 | 3.6 | 3.6 |
| Oil 1 | 5 | 5 | 5 | 5 |
| Zinc oxide | 2 | 2 | 2 | 2 |
| Anti-aging agent 1 | 1.5 | 1.5 | 1.5 | 1.5 |
| Sulfur 1 | 1.5 | 1.5 | 1.5 | 1.5 |
| Vulcanization accelerator 1 | 1 | 1 | 1 | 1 |
| Vulcanization accelerator 2 | 0.5 | 0.5 | 0.5 | 0.5 |

(continued)

| | Example | | Comparative Example | |
|---|---|---|---|---|
| | 20 | 21 | 20 | 21 |
| Evaluation | | | | |
| Index of processability | 100 | 98 | 100 | 98 |
| Index of rolling resistance | 105 | 103 | 100 | 102 |
| Index of rubber strength | 120 | 125 | 100 | 108 |
| Index of steering stability | 108 | 110 | 100 | 103 |

From the results of Table 11, it can be seen that the rubber composition for under tread comprising silica that has a BET specific surface area and a hardness of granulated particles as measured in accordance with a predetermined method within a predetermined range is excellent in rubber strength and steering stability while maintaining energy efficiency.

## Claims

1. A rubber composition comprising silica that has a BET specific surface area of not less than 50 $m^2$/g and not more than 130 $m^2$/g and a hardness of granulated particles as measured based on JIS K6221-1982 6.3.3 of not less than 23.5 cN.

2. The rubber composition of claim 1, wherein a DBP oil absorption amount of the silica is not more than 180 ml/100 g.

3. The rubber composition of claim 1 or 2, wherein a pore volume in pores with a pore diameter of 10 to 100 nm in the silica is not more than 1.7 ml/g.

4. A tire comprising a component consisted of the rubber composition of any of claims 1 to 3.

5. A tire comprising a base tread consisted of the rubber composition of any of claims 1 to 3.

6. A tire comprising a clinch apex consisted of the rubber composition of any of claims 1 to 3.

7. A tire for truck and bus comprising a tread consisted of the rubber composition of any of claims 1 to 3.

8. A tire comprising a bead apex consisted of the rubber composition of any of claims 1 to 3.

9. A tire comprising an inner liner consisted of the rubber composition of any of claims 1 to 3.

10. A winter tire comprising a tread consisted of the rubber composition of any of claims 1 to 3.

11. A tire comprising a side wall consisted of the rubber composition of any of claims 1 to 3.

12. A tire comprising an under tread consisted of the rubber composition of any of claims 1 to 3.

## Patentansprüche

1. Kautschukzusammensetzung umfassend Silica, das eine BETspezifische Oberfläche von nicht weniger als 50 $m^2$/g und nicht mehr als 130 $m^2$/g und eine Härte granulierter Teilchen wie gemessen basierend auf JIS K6221-1982 6.3.3 von nicht weniger als 23,5 cN aufweist.

2. Kautschukzusammensetzung nach Anspruch 1, wobei eine DBP-Öladsorptionsmenge des Silica nicht mehr als 180 mL/100 g ist.

3. Kautschukzusammensetzung nach Anspruch 1 oder 2, wobei ein Porenvolumen in Poren mit einem Porendurchmesser von 10 bis 100 nm im Silica nicht mehr als 1,7 mL/g ist.

4. Reifen umfassend eine Komponente bestehend aus der Kautschukzusammensetzung nach einem der Ansprüche 1 bis 3.

5. Reifen umfassend ein Basisprofil bestehend aus der Kautschukzusammensetzung nach einem der Ansprüche 1 bis 3.

6. Reifen umfassend einen Wulststreifen-Apex bestehend aus der Kautschukzusammensetzung nach einem der Ansprüche 1 bis 3.

7. Reifen für Lastkraftwagen und Bus umfassend ein Profil bestehend aus der Kautschukzusammensetzung nach einem der Ansprüche 1 bis 3.

8. Reifen umfassend ein Wulst-Apex bestehend aus der Kautschukzusammensetzung nach einem der Ansprüche 1 bis 3.

9. Reifen umfassend eine Innenverkleidung bestehend aus der Kautschukzusammensetzung nach einem der Ansprüche 1 bis 3.

10. Winterreifen umfassend ein Profil bestehend aus der Kautschukzusammensetzung nach einem der Ansprüche 1 bis 3.

11. Reifen umfassend eine Seitenwand bestehend aus der Kautschukzusammensetzung nach einem der Ansprüche 1 bis 3.

12. Reifen umfassend ein Unterprofil bestehend aus der Kautschukzusammensetzung nach einem der Ansprüche 1 bis 3.

**Revendications**

1. Composition de caoutchouc comprenant de la silice qui a une surface spécifique BET qui est supérieure à 50 m$^2$/g et inférieure à 130 m$^2$/g et une dureté des particules granulées telle que mesurée sur la base de la norme JIS K6221-1982 6.3.3 qui est supérieure à 23,5 cN.

2. Composition de caoutchouc selon la revendication 1, dans laquelle une quantité d'absorption d'huile DBP de la silice est inférieure à 180 ml/100 g.

3. Composition de caoutchouc selon la revendication 1 ou 2, dans laquelle un volume de pore dans les pores ayant un diamètre de pore de 10 à 100 nm dans la silice est inférieur à 1,7 ml/g.

4. Pneu comprenant un composant composé de la composition de caoutchouc selon l'une quelconque des revendications 1 à 3.

5. Pneu comprenant une bande de roulement de base composée de la composition de caoutchouc selon l'une quelconque des revendications 1 à 3.

6. Pneu comprenant un apex de rivet composé de la composition de caoutchouc selon l'une quelconque des revendications 1 à 3.

7. Pneu pour un camion et un bus comprenant une bande de roulement composée de la composition de caoutchouc selon l'une quelconque des revendications 1 à 3.

8. Pneu comprenant un apex de talon composé de la composition de caoutchouc selon l'une quelconque des revendications 1 à 3.

9. Pneu comprenant un calandrage intérieur composé de la composition de caoutchouc selon l'une quelconque des revendications 1 à 3.

10. Pneu d'hiver comprenant une bande de roulement composée de la composition de caoutchouc selon l'une quelconque des revendications 1 à 3.

11. Pneu comprenant une paroi latérale composée de la composition de caoutchouc selon l'une quelconque des revendications 1 à 3.

12. Pneu comprenant une sous-bande de roulement composée de la composition de caoutchouc selon l'une quelconque des revendications 1 à 3.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014125548 A

- DE 1807714 B1